(19) Europäisches Patentamt
European Patent Office
Office européen des brevets

(11) **EP 2 018 571 B1**

(12) **FASCICULE DE BREVET EUROPEEN**

(45) Date de publication et mention
de la délivrance du brevet:
**07.04.2010 Bulletin 2010/14**

(21) Numéro de dépôt: **07729223.3**

(22) Date de dépôt: **16.05.2007**

(51) Int Cl.:
***G01P 15/12*** *(2006.01)*

(86) Numéro de dépôt international:
**PCT/EP2007/054775**

(87) Numéro de publication internationale:
**WO 2007/135064 (29.11.2007 Gazette 2007/48)**

(54) **DISPOSITIF SENSIBLE A UN MOUVEMENT COMPORTANT AU MOINS UN TRANSISTOR**

BEWEGUNGSEMPFINDLICHE ANORDNUNG MIT MINDESTENS EINEM TRANSISTOR

MOTION-SENSITIVE DEVICE COMPRISING AT LEAST ONE TRANSISTOR

(84) Etats contractants désignés:
**DE FR GB IT**

(30) Priorité: **18.05.2006 FR 0651822**

(43) Date de publication de la demande:
**28.01.2009 Bulletin 2009/05**

(73) Titulaire: **Commissariat à l'Energie Atomique**
**75015 Paris (FR)**

(72) Inventeurs:
• **OLLIER, Eric**
**F-38100 Grenoble (FR)**
• **DURAFFOURG, Laurent**
**F-38500 Voiron (FR)**
• **ANDREUCCI, Philippe**
**F-38430 Moirans (FR)**

(74) Mandataire: **Ilgart, Jean-Christophe et al**
**Brevalex**
**3, rue du Docteur Lancereaux**
**75008 Paris (FR)**

(56) Documents cités:
JP-A- 58 034 946 US-A- 5 541 437
US-A1- 2003 173 611

• BUSCHNAKOWSKI S ET AL: "Development and characterisation of a high aspect ratio vertical fet sensor for motion detection" TRANSDUCERS, SOLID-STATE SENSORS, ACTUATORS AND MICROSYSTEMS, 12TH INNATIONAL CONFERENCE ON, 2003, PISCATAWAY, NJ, USA,IEEE, vol. 2, 9 juin 2003 (2003-06-09), pages 1391-1394, XP010647614 ISBN: 0-7803-7731-1 cité dans la demande

## Description

## DOMAINE TECHNIQUE ET ART ANTÉRIEUR

L'invention concerne le domaine des MEMS (Micro-Electro-Mechanical-Systems) et/ou NEMS (Nano-Electro Mechanical-Systems).

Elle concerne également le domaine des dispositifs détecteurs de mouvement de structures mécaniques, et propose une structure permettant de mettre en oeuvre un principe de détection plus performant que la détection capacitive traditionnellement utilisée dans ce domaine de détection de mouvements.

L'invention s'applique à des dispositifs MEMS-NEMS, notamment du type réalisé sur substrat de Silicium (SOI (« Silicon On Insulator »), SON (« Silicon On Nothing »),...). Ce sont, par exemple des dispositifs de type capteurs (d'accélération, de vibrations, ou gyromètre, ou capteurs de pression, etc...) fabriqués sur des substrats SOI mince (par ex. 160 nm de SOI sur 400 nm de $SiO_2$) avec pour objectif d'intégrer ensemble le dispositif NEMS ou MEMS et son circuit électronique dans une approche d'intégration « in IC ».

Des dispositifs avec des transistors de type SET (Single Electron Transistor) sont décrits dans le document « Nanoelectronic and nanomechanical systems », J.S. Aldridge et al., SPIE Proceedings 4591,11 (2001). Ce type de réalisation met également en oeuvre des structures de type NEMS et des SET.

Le fonctionnement de ce type de composant est très particulier et non adapté dans l'état actuel des développements à une co-intégration MEMS-IC.

Les techniques de fabrication actuelles de ces dispositifs SET reposent soit sur les méthodes physiques de la technologie des semi conducteurs (dépôts, photolithographie) soit sur des méthodes d'auto-assemblage chimique.

L'approche « physique » conduit à des tailles importantes des dispositifs par rapport à ce qui serait nécessaire pour des SET. Une des conséquences est le fonctionnement refroidi obligatoire pour ces composants (souvent <1K). L'approche « chimique » permet d'atteindre des tailles plus faibles (îlots de quelques nm), mais la technique est peu mature. Il existe également des techniques utilisant l'AFM, par exemple pour former des lignes de TiOx dans une couche Ti, créant ainsi les jonctions tunnel entre les éléments en Ti (2 électrodes + 1 îlot de 5nm).

Les réalisations sont en général basées sur des matériaux métalliques (Al, Ti...) avec des bandes d'air ou d'oxyde de ce même matériau (Al203, TiOx ...) pour réaliser les jonctions tunnel. Or ces matériaux sont peu adaptés à la réalisations de MEMS performants de part leur caractéristiques mécaniques.

Ces exemples montrent que l'utilisation de SET mène à des situations extrêmes qui conduisent à des difficultés technologiques de fabrication très importantes et non compatibles dans l'état actuel avec une bonne reproductibilité et une fabrication collective de masse. L'industrialisation des procédés mettant en oeuvre ces SET n'est donc pas à l'ordre du jour actuellement.

Enfin, les dispositifs mettant en oeuvre des SET nécessitent de travailler à des températures très faibles (quelques mK) ce qui n'est pas compatible avec l'objectif de réaliser des structures fabriquées collectivement et à faible coût.

On connaît par ailleurs l'utilisation de transistors (par exemple de type MOSFET), pour réaliser des capteurs.

Une des parties du transistor (par exemple la grille) est influencée par le mouvement de la structure mécanique, ce qui conduit à une variation de courant lds (courant source-drain) du transistor sensible au mouvement mécanique.

Ainsi, un transistor FET (Field Effect Transistor) de type planaire ou de type à canal vertical peut être mis en oeuvre.

Des dispositifs avec des transistors de type FET planaire sont par exemples décrits dans les documents de Abelé (2005) : « Electromechanical modelling of MEMS Resonators with MOSFET detection », NSTI Nanotech 2005 Conférence, ISBN 0-9767985-2-2 Vol.3, 2005 ; WO 03/0 78299 ; US 5,541,437 ; US 6,204,544.

Dans ces documents, la variation de courant lds du transistor est obtenue par un mouvement de la grille du transistor en regard du canal créé entre la source et le drain du transistor. Ce déplacement de la grille par rapport au canal induit une variation de capacité entre la grille et le canal Cgc, donc une variation de champ au niveau du canal, ce qui se traduit par une variation de courant de sortie lds du transistor.

Dans ces documents, le déplacement de la grille s'effectue :

- soit perpendiculairement à la puce et au canal. Dans ce cas là, la variation de courant lds est due à une variation de capacité Cgc obtenue par variation de l'entrefer entre les deux électrodes constituées par la grille et le canal,
- soit dans un plan parallèle au plan de la puce. Dans ce cas là, la variation de courant lds est due à une variation de capacité Cgc obtenue par variation de surface entre les deux électrodes constituées par la grille et le canal.

Dans toutes ces réalisations le transistor est un transistor planaire réalisé dans le plan du substrat : le plan du canal est situé dans le plan de la puce, près de l'interface (conduction près de l'interface). Cette approche, classique du point de vue de la réalisation du transistor, permet de travailler avec des transistors de qualité (qualité de l'interface oxyde/semi-conducteur).

Néanmoins ces approches présentent l'inconvénient d'imposer la réalisation de structures mécaniques mobiles au-dessus du plan du transistor planaire, que ce soit dans le cas d'un déplacement hors plan (perpendiculaire au plan de la puce) mais également dans le cas de déplacements dans le plan. Dans ce dernier cas, le déplacement de la structure mécanique s'effectue dans un plan parallèle au plan du canal mais différent de celui-ci (en général au-dessus).

Cette approche conduit à la réalisation de la structure MEMS dans des couches supplémentaires déposées en plus de la couche de semi-conducteur utilisée pour la fabrication du transistor (et d'un éventuel circuit IC). Cette situation se traduit par un empilement technologique complexe, conduit à la réalisation de structures mécaniques dans des matériaux déposés (poly Si, métaux, etc...) non optimum du point de vue mécanique (défauts matériaux, contraintes...). Enfin, ces approches posent des problèmes de compatibilité pour un intégration CMOS-MEMS (budget thermique, protection lors de la libération,...). Les voies envisagées imposent de séparer les étapes de fabrication du MEMS et du CMOS, ce qui conduit à des limitations sur les designs envisagés, une complexité technologique accrue et des problèmes de rendements et de coût de fabrication. C'est le cas en particulier pour les approches « Above IC » pour lesquelles les contraintes en terme de rendement au niveau du MEMS sont extrêmes, du fait que celui-ci est réalisé en fin de procédé. Par exemple, pour les voies « post-CMOS », où le MEMS est réalisé après le circuit CMOS, les contraintes en terme de budget thermique ou de contraintes induites par les étapes MEMS sont très serrées pour ne pas détériorer les performances du circuit. Pour les voies « pre-CMOS », où le MEMS est réalisé avant le circuit, il est nécessaire de mettre en oeuvre un assemblage technologique qui permet de protéger le MEMS pendant la fabrication du circuit.

Des dispositifs avec des transistors de type FET vertical sont décrits dans les documents : « Development and characterisation of a high aspect ratio vertical FET sensor for motion detection » Buschnakowski et al., Transducers 2003, Boston, June 8-12, 2003, et US 2003/0173611.

Cette approche permet de réaliser la structure mécanique et la structure électrique dans le même plan.

Néanmoins la configuration particulière du transistor « vertical » rend difficile le contrôle précis des zones du transistor (source, drain, canal), ce qui se traduit par des performances non optimales et des problèmes de reproductibilité de ce type de transistor. En effet, dans cette approche, les distributions des dopants des zones de source et drain, définissant notamment la longueur du canal, ne sont pas définies par des motifs issus d'une étape de photolithographie, mais directement par des étapes d'implantation dans l'épaisseur de la couche de silicium. De plus, ce contrôle devient de plus en plus difficile au fur et à mesure de l'amincissement de la couche de semi-conducteur utilisée, par exemple dans le cas de films SOI mince (en dessous de quelques 100 nm en particulier).

Il se pose donc le problème de trouver une nouvelle structure de dispositif permettant de résoudre ces problèmes.

## EXPOSÉ DE L'INVENTION

L'invention permet justement de résoudre ces problèmes.

Elle met en oeuvre une détection par un ou plusieurs transistor, au lieu d'une détection capacitive usuellement utilisée pour les accéléromètres dans un plan.

L'invention concerne un dispositif de détection par au moins un transistor avec canal vertical, comportant une masse ou une structure mécanique, cette dernière et le transistor étant mobiles, relativement l'un par rapport à l'autre, dans un plan contenant le drain, la source et le canal du transistor.

Au moins un transistor est formé, d'une part, par une grille et, d'autre part, par un élément de conduction comprenant une source et un drain reliés par un semi-conducteur. Ce transistor est relié, par l'intermédiaire de la grille ou de l'élément de conduction, à une structure mécanique. La grille et l'élément de conduction sont aptes à se déplacer l'un par rapport à l'autre, l'un étant fixe, l'autre étant relié à une structure mécanique mobile.

La grille ou les grilles peut ou peuvent être fixe(s), et la structure mécanique être mobile. Ou bien, la grille ou les grilles peut ou peuvent être mobile(s), et la structure mécanique être fixe.

Le transistor et la structure mécanique contiennent au moins un même plan, ou sont dans un même plan, dit plan principal du dispositif.

L'élément de conduction du transistor et la grille sont disposés en regard l'un de l'autre de sorte que la direction de conduction entre la source et le drain soit contenue dans le plan principal. Les surfaces en regard de l'élément de conduction et de la grille définissent des plans sensiblement perpendiculaires au plan principal.

Le plan principal d'un dispositif selon l'invention est par exemple défini par la surface supérieure du substrat à partir duquel sont réalisés le transistor et la structure mécanique. Cette réalisation peut résulter d'un ensemble d'étapes de dépôts et de gravures. Ce plan principal passe par le drain, la source et la grille du transistor.

Par canal vertical, on entend que le plan du canal est perpendiculaire au plan principal du dispositif ou au plan du substrat dans lequel le dispositif est réalisé. La direction de propagation du courant, entre la source et le drain, dans le canal, est incluse dans ce plan principal ou dans le plan de ce substrat.

Selon une définition l'invention concerne un dispositif de détection comportant au moins un transistor formé, d'une part, par une grille et, d'autre part, par un élément de conduction comprenant une source et un drain reliés par un semi-conducteur formant un canal vertical, en ce sens que les surfaces en regard de l'élément de conduction et de la grille définissent des plans sensiblement perpendiculaires à un plan, dit plan principal du dispositif, passant par le drain, la source et la grille du transistor, la direction de propagation du courant, entre la source et le drain, dans le canal, étant incluse dans ce plan principal, la grille et l'élément de conduction étant aptes à se déplacer relativement l'un par rapport à l'autre. L'un peut être fixe, et l'autre être relié à une structure mécanique, mobile dans le plan principal.

Un procédé de détection selon l'invention met en oeuvre un dispositif de détection tel que ci-dessus.

L'invention propose donc un dispositif et un procédé de détection par transistor avec canal vertical et réalisation de la structure mécanique dans un même plan, par exemple celui d'une couche de semi-conducteur utilisée pour la fabrication du transistor et des éventuels circuits IC co-intégrés. Cette couche peut être la couche superficielle d'un substrat SOI.

La structure mécanique mobile (comprenant soit le transistor, soit la grille) peut être non résonante ou résonante.

L'invention permet, du fait du déplacement dans un plan, de réaliser des détections différentielles. Il est ainsi possible de s'affranchir notamment des problèmes de température.

La structure mécanique peut entraîner un déplacement relatif de la grille par rapport à l'élément de conduction de façon à faire varier la capacité électrique définie par les surfaces en regard, entraînant une modification du courant de sortie Ids du transistor en amplitude et/ou en fréquence.

Le mouvement relatif de la grille par rapport à l'élément de conduction peut être une variation de la distance séparant les surfaces en regard, ou bien une variation des surfaces en regard, consécutive à un déplacement relatif dans un plan parallèle ou éventuellement perpendiculaire au plan principal.

Un procédé et un dispositif selon l'invention permet de détecter tout phénomène physique susceptible d'entraîner une variation du mouvement (ou de déplacement) de la structure mécanique (variation de masse, accélération), ou d'imposer un mouvement adapté à la structure mécanique, qui permet d'obtenir un signal de sortie approprié du transistor. Il peut fonctionner en boucle ouverte (par récupération du signal en sortie du dispositif) ou en boucle fermée, par exemple par réinjection par asservissement, notamment à partir de forces électrostatiques, du signal de sortie du dispositif, par exemple pour neutraliser le mouvement.

Un dispositif selon l'invention peut comporter plusieurs transistors associés à une même structure mécanique, de façon à optimiser ses caractéristiques (sensibilité, bande passante, résolution). En particulier, ces transistors peuvent être combinés pour obtenir des informations sur le mouvement selon plusieurs directions ou pour obtenir une détection différentielle ou encore pour amplifier les informations détectées ou pour réduire l'influence des informations parasites (par exemple pour un actionneur). Ainsi, en utilisant 2 ou 3 transistors, on peut réaliser des détections de déplacement 2D ou 3D avec un même composant.

Un transistor d'un dispositif selon l'invention peut présenter plusieurs modes de fonctionnement, en fonction de ses caractéristiques physiques (dimensions, dopages...) et/ou de ses tensions de polarisation (par ex grille/source et/ou drain/source). En particulier, le transistor peut fonctionner selon un régime dit «de faible inversion », pour privilégier la linéarité du signal de sortie, ou « de forte inversion » pour privilégier l'amplitude du signal de sortie.

## BRÈVE DESCRIPTION DES DESSINS

- Les figures 1A, 1B représentent des variantes d'un premier mode de réalisation de l'invention,
- les figures 2 et 3 représentent un accéléromètre, respectivement non résonant et résonnant, selon l'invention,
- les figures 4A, 4B et 5 représentent diverses configurations de dispositifs selon l'invention permettant une détection différentielle,
- la figure 6 représente un dispositif selon l'invention, permettant un fonctionnement en différentiel et en boucle fermée,
- les figures 7 et 10 représentent chacune un dispositif selon l'invention, permettant un fonctionnement une détection de mouvements en 2 ou 3 dimensions,
- les figures 8A, 8B et 9 représentent un dispositif selon l'invention, permettant un fonctionnement en différentiel, avec, respectivement, des gaps alternés et des transistors de types différents,
- les figures 11A, 11B, 12A, 12B représentent deux modes de réalisation d'un dispositif de détection de type MOS, selon l'invention, respectivement avec pistes silicium et pistes en métal,
- les figures 13A - 13E représentent des étapes de réalisation d'un dispositif selon les figures 11A et 11B, avec des liaisons et des plots en semi-conducteur,
- les figures 14A - 14E représentent des étapes de réalisation d'un dispositif selon les figures 12A et 12B.

**EXPOSÉ DÉTAILLÉ DE MODES DE RÉALISATION PARTICULIERS**

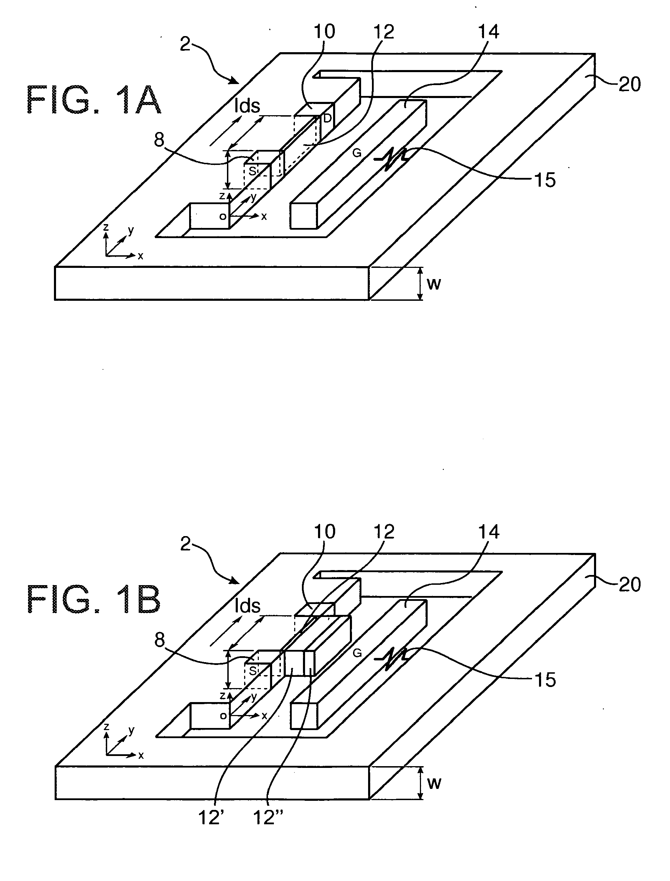

Un dispositif selon l'invention est représenté en figure 1A.

Il comporte au moins une structure de transistor 2 de type FET (par ex. un MOSFET), comportant un élément de conduction (une source 8 et un drain 10 séparés par un élément, ou canal, 12, en matériau semi conducteur) ainsi qu'une grille 14, et au moins une structure mécanique de type MEMS ou NEMS, ces 2 structures étant réalisées dans une même couche mince 20, par exemple la couche de silicium superficielle d'un substrat SOI, et étant mobiles l'une par rapport à l'autre.

Dans la suite, grille, canal, drain et source seront aussi désignés, respectivement, par les lettres G, C, D et S.

Un des 2 éléments du transistor (élément de conduction comportant le canal 12 ou la grille 14) est relié à la structure mobile. En d'autres termes, la structure MEMS comporte un élément jouant le rôle de grille 14 du transistor. La structure mobile peut aussi être liée au substrat par des moyens 15 formant une liaison, par exemple élastique. C'est notamment le cas en figure 1A où c'est la grille qui est reliée au substrat par une liaison élastique 15.

Le transistor est appelé «transistor vertical» : le plan du canal 12 de conduction entre la source 8 et le drain 10 (plan yOz sur la figure 1A) est perpendiculaire au plan de la puce (plan xOy sur la figure). On peut également dire que la structure mécanique et la structure électrique sont réalisées entre deux plans sensiblement parallèles entre eux et parallèles au plan du substrat ou au plan principal. La couche 20 est située entre ces deux plans parallèles entre eux.

Les largeur et longueur du canal 12 sont données respectivement par w et 1. Par exemple w est l'épaisseur de la couche 20 dans laquelle est réalisée la structure mécanique mobile. Ce peut être l'épaisseur de silicium superficiel d'un substrat SOI mince. Le transistor, de même que chacun des transistors dont il sera question dans la suite, peut être de type n ou p.

Les 2 structures (transistor et MEMS) sont aptes à se déplacer l'une par rapport à l'autre, un déplacement induisant une variation de capacité Cgc entre la grille 14 et le canal 12. Ceci se traduit par une variation de courant de sortie lds du transistor. Les relations entre le courant de sortie et le mouvement mécanique sont connues, par exemple dans l'article de Abélé déjà cité dans l'introduction.

Le déplacement de la structure MEMS 14 peut s'effectuer selon les 3 directions : x, y ou z. Dans le cas d'un déplacement selon x, la variation de capacité est due à une variation de l'entrefer entre les 2 électrodes constituées par le canal 12 et la grille 14. Dans le cas d'un déplacement selon y ou z, la variation de capacité est due à une variation de la surface en regard entre les 2 électrodes 12, 14 constituées par le canal et la grille.

On peut avoir une structure de transistor fixe et une grille 14 mobile (reliée au MEMS) mais également l'inverse, c'est-à-dire une grille 14 fixe et une structure de transistor mobile (reliée au MEMS).

La présence d'un gap entre l'élément 12 de conduction et la grille 14 éloigne, du point de vue électrique, la grille du canal, détériore donc le contrôle du transistor par la grille et limite la sensibilité du dispositif au mouvement mécanique.

Afin d'optimiser le fonctionnement du dispositif selon l'invention, on peut ajouter, comme illustré sur la figure 1B, en surface du canal 12 de l'élément de conduction, un oxyde 12' de grille solide et un autre matériau 12" (par exemple en silicium ou en métal) jouant le rôle de grille du transistor (Gf). Cette grille est dite flottante, c'est-à-dire qu'elle est laissée à un potentiel flottant lors du fonctionnement : ainsi, pour créer le canal du transistor, la tension VGS est appliquée entre la grille 14 et la source 8, mais la présence de cette grille flottante Gf permet d'améliorer le contrôle électrostatique du transistor.

Un dispositif selon l'invention peut être fabriqué sur des substrats SOI minces : l'épaisseur w de la couche 20, qui constitue alors la couche superficielle d'un substrat SOI, est inférieure à 1 $\mu$m, par exemple comprise entre 100 nm et 500 nm. Il est également possible d'utiliser des technologies de type « SON » (film SiGe par exemple, utilisé comme couche sacrificielle).

Un dispositif selon l'invention peut être appliqué à la fabrication d'un accéléromètre à détection par transistor avec axe sensible dans le plan yOx (figure 1A).

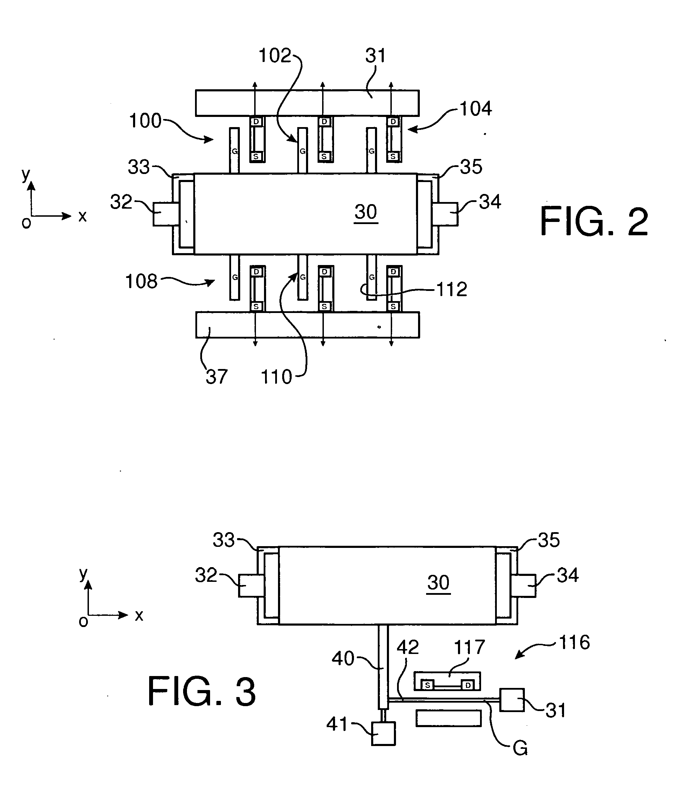

Les figures 2 et 3 montrent deux structures d'accéléromètres à détection par transistor selon l'invention, respectivement avec des structures non résonante et résonante. Sur ces deux figures, les références 32 et 34 désignent chacune un plot où point fixe de référence, relié à la masse mobile 30 par l'intermédiaire d'au moins un bras ou une poutre 33, 35, flexible dans le plan de la figure.

Dans le cas de la structure non résonante (Figure 2), l'accélération provoque le déplacement de la masse 30 à laquelle sont liées les grilles G d'une pluralité de transistors 100, 102, 104, 108, 110, 112, sensiblement parallèles entre eux. La variation de distance entre chaque grille G et le canal correspondant des transistors modifie le courant de sortie de ces derniers. Pour cela, les transistors sont naturellement polarisés selon le fonctionnement désiré, en appliquant en particulier une tension Vgs entre grille et source de façon à créer le canal, et une tension Vds entre source et drain de façon à créer un courant Idk ou Id'k (k = 1, 2, 3). La détection se fait donc en suivant les variations d'amplitude $\Delta$Idk ou $\Delta$Id'k du courant de sortie de chaque transistor ou un signal constitué à partir des informations de chacun de ces transistors, par exemple la somme des courants ou la moyenne des courants. Dans ce mode de réalisation un peigne (formé par les grilles G) est solidaire de la masse 30, donc mobile avec elle. Un peigne fixe 31, 37 est disposé de chaque côté de la masse mobile 30. C'est par rapport à ce peigne fixe, qui porte les transistors 100, 102, 104, 108, 110, 112, que se déplace la masse mobile 30, et donc également chacune des grilles G. Plus généralement, un dispositif selon l'invention comporte :

- au moins une masse mobile ou une structure mobile reliée à une partie fixe par des moyens autorisant un déplacement de la masse mobile ou de la structure mobile par rapport à la partie fixe,
- et au moins un peigne à au moins deux dents, ce peigne comportant, sur chaque dent mobile, une grille, et, sur chaque dent fixe, une source et un drain séparés par un canal.

Dans le cas de la structure résonante (Figure 3), l'accélération provoque le déplacement de la masse 30 dans le plan xOy selon la direction x et, par l'intermédiaire de moyens de liaison 40, la mise en contrainte de la structure mécanique 42 constituant le résonateur. La référence 41 désigne un plot fixe sur le substrat. La fréquence de résonance du résonateur dépend de la contrainte mécanique qu'il subit, donc de l'accélération. Les mouvements de ce résonateur sont contrôlés par un actionneur, par exemple électrostatique, et ses déplacements sont détectés par un « transistor vertical » 116 selon l'invention, de grille mobile G en face de laquelle est disposé l'ensemble source-canal-drain 117, comme sur la figure 1A.

Les transistors sont polarisés selon le fonctionnement désiré, en appliquant en particulier une tension Vgs entre grille et source de façon à créer le canal, et une tension Vds entre source et drain de façon à créer le courant Ids. La détection se fait donc en suivant les variations de fréquence du courant de sortie des transistors.

L'accéléromètre décrit comporte une masse mobile 30 suspendue par des poutres flexibles 33, 35 et susceptible de se déplacer dans le plan de la puce, ainsi que au moins une structure 100, 102, 104, 106, 108, 110, 112 (figure 2), 116 (figure 3) d'un ou de plusieurs transistors, dont chacun est vertical en regard d'une grille G, liée à une la masse mobile 30. Ces structures sont réalisées dans le même plan et, de façon avantageuse, dans le même film mince, par exemple le film de silicium superficiel d'un substrat SOI.

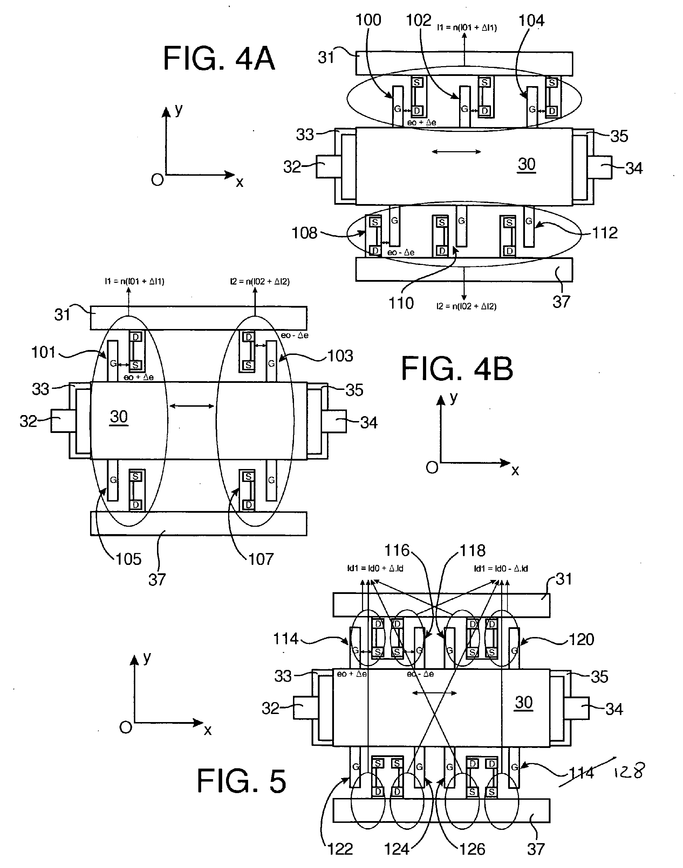

Pour augmenter le courant de sortie total It du capteur, on peut également constituer une structure de peigne à n transistors et sommer les courants de sortie Ids des divers transistors : le courant total en sortie du capteur est alors It=n.Ids=n. (Id0+ΔId0), n étant le nombre de transistors, Id0 étant le courant de sortie d'un des transistors avant déplacement de la masse 30, ΔId0 étant la variation de courant de sortie d'un des transistors due au déplacement de la masse 30 consécutivement à une accélération. Un exemple d'une structure fonctionnant sur ce principe est celle de la figure 2. Ce principe peut être également utilisé dans le cas de structures permettant une détection différentielle (figures 4A, 4B, 5).

Pour éliminer les problèmes liés aux effets de température, des configurations permettant une détection différentielle peuvent être mises en oeuvre avec cette approche, comme le montrent l'exemple des figures 4A et 4B sur lesquelles les références 30-35, 100-112 désignent des éléments identiques ou similaires à ceux de la figure 2. Les transistors de la figure 4B sont désignés par les références 101, 103, 105, 107. En détection différentielle, la sortie du capteur est It=$I_1$-$I_2$. Dans le cas particulier où les transistors sont de même type pour les peignes 1 et 2, on a :

a) $I_1$ = n. ($I_{01}$ + $\Delta I_1$) est le courant de sortie total des transistors de l'un des peignes,
b) $I_2$ = n. ($I_{02}$ - $\Delta I_2$) est le courant de sortie total des transistors de l'autre peigne,

Dans ces formules :

- n est le nombre de transistors sur chaque peigne ; sur la figure 4A, n = 3,
- $I_{01}$ et $I_{02}$ sont respectivement les courants entre source et drain d'un transistor en position de repos du peigne 1 ou du peigne 2,
- $\Delta I_1$ et $\Delta I_2$ sont respectivement la variation de courant entre source et drain d'un transistor du peigne 1 et du peigne 2, consécutifs à un déplacement de la masse 30.

Ceci conduit dans cette configuration à $\Delta I_1$ = $\Delta I_2$.

Sur les figures 4A et 4B, deux ensembles de détection E1 et E2, disposés de part et d'autre d'une structure mobile, et permettent respectivement de produire les courants $I_1$ et $I_2$. Chaque ensemble de détection comporte des peignes, et chacune des dents des peignes comporte des moyens de détection. De même, la structure mobile comporte deux peignes, dont les dents sont disposées en face des dents des peignes des ensembles de détection E1 et E2. La différence entre les deux ensembles E1 et E2 est le positionnement opposé des dents fixes et mobiles, de façon à ce qu'un déplacement de la structure mobile produise, selon l'axe Ox, sur un des ensembles E1, E2, une réduction du gap entre grille et élément de conduction, alors que, sur l'autre ensemble, il produit une augmentation du gap de la même amplitude.

Entre les figures 4A et 4B la différence réside dans le positionnement de E1 et E2 par rapport à la structure mobile.

Sur la figure 4A, les dents d'un même ensemble fixe sont du même côté par rapport aux dents mobiles :

- pour E1, les ensembles 100, 102, 104 forment successivement 3 (ou plus généralement : n) sous-ensembles dent mobile-dent fixe, dans cet ordre selon l'axe Ox,
- pour E2, les ensembles 108, 110, 112 forment successivement 3 (ou plus généralement : n) sous-ensembles dent fixe-dent mobile, dans cet ordre selon l'axe Ox.

Sur la figure 4B, les dents d'un même ensemble fixe sont alternées par rapport aux dents mobiles :

- pour E1, les ensembles 101, 103, forment 2 (ou plus généralement : n) sous-ensembles dent mobile-dent fixe, puis dent fixe-dent mobile dans cet ordre selon l'axe Ox,
- pour E2, les ensembles 105, 107, forment également 2 (ou plus généralement : n) sous-ensembles dent mobile-dent fixe, puis dent fixe-dent mobile, dans cet ordre selon l'axe Ox.

Si les transistors de la première et de la seconde configuration sont identiques, avec le même entrefer (distance grille-canal) :

- $I_1 = n. (I_0 + \Delta I)$
- $I_2 = n. (I_0 - \Delta I)$ ;

alors le courant de sortie devient It=2.n.$\Delta$I, $\Delta$I étant la variation de courant induite au niveau d'un transistor par le déplacement de la masse consécutive à une accélération.

La figure 5 est une autre configuration permettant une détection différentielle, les transistors 114, 122, 126, 118 fournissant chacun un signal Id1 = Id0 + $\Delta$Id, les transistors 116, 124, 120, 128 fournissant chacun un signal Id2 = Id0 - $\Delta$Id. Une combinaison de ces différents signaux aboutit à un signal égal à 2nId0, n étant le nombre de couples de transistors sur une même dent, par exemple n = 4 sur la figure 5.

Dans les structures présentées, les dispositions de paires de transistors tête bêche permettent de réaliser des mesures différentielles : on a alors alternativement, sur un même axe (axe de déplacement Ox de la masse mobile sur les figures 4B et 5), et dans cet ordre, une première grille, un premier ensemble drain-canal-source, un deuxième ensemble drain-canal-source, une deuxième grille, ou bien un premier ensemble drain-canal-source, une première grille, une deuxième grille, un deuxième ensemble drain-canal-source.

Cette approche permet également de réaliser des structures fonctionnant en boucle fermée, de façon à améliorer les performances du système MEMS+Electronique, notamment du point de vue de la linéarité., en ajoutant, en plus des moyens de détection par transistor, des moyens (par exemple électrostatiques) permettant de contrôler la position de la masse.

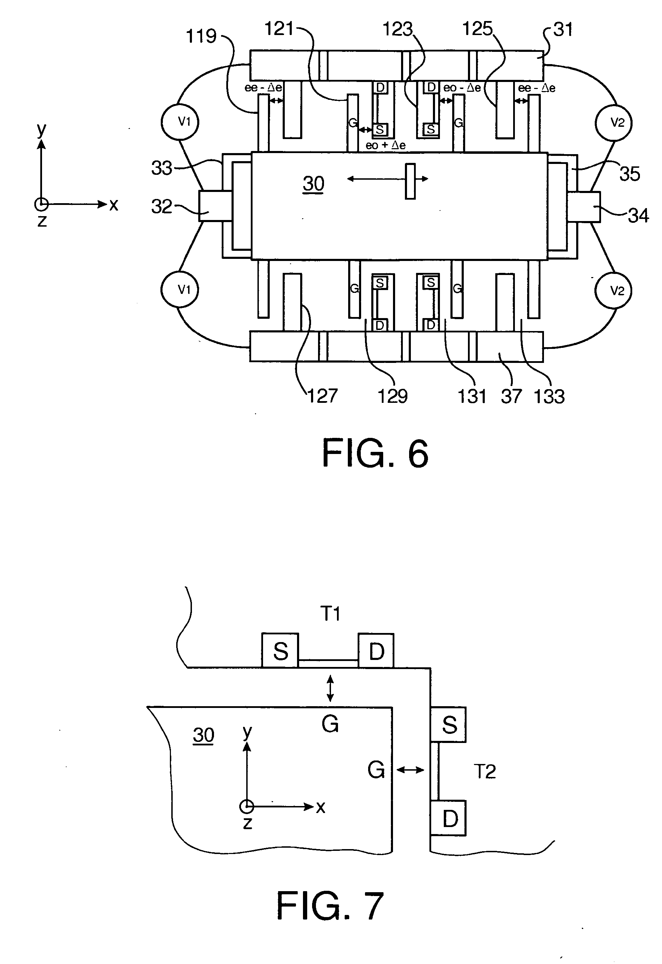

Le schéma de la figure 6 montre un exemple de configuration permettant ce fonctionnement, avec une partie des peignes 31, 37 dédiée à la détection (par les transistors 121, 123, 129, 131) et une partie de ces mêmes peignes dédiée à l'actionnement (par force électrostatique pour contre-réaction, à l'aide des couples d'électrodes 119, 127, 125, 133). Des tensions $\Delta V_1$, $\Delta V_2$, sont établies respectivement entre les plots 32, 34, reliés électriquement aux électrodes mobiles par l'intermédiaire des poutres flexibles, et les peignes fixes 31, 37.

La partie dédiée à la détection comporte des transistors 121, 123, 129, 131 placés tête bêche pour permettre une détection différentielle selon la direction x. Les transistors sont polarisés en fonction du fonctionnement désiré, une tension Vgs entre la grille G et la source permettant de former le canal et une tension Vds entre le drain et la source permettant la circulation du courant dans le transistor, celui-ci étant contrôlé par la distance entre la grille et le canal.

La partie actionnement est constituée de couples d'électrodes 119, 127, 125, 133 ou de peignes électrostatiques susceptible de créer une force électrostatique s'opposant au déplacement de la masse sous l'effet de l'accélération. Par exemple, un déplacement de la masse mobile consécutif à une accélération dans le sens des x > 0 va induire une variation de courant Ids détectée par les transistors de détection. L'application d'une tension $\Delta V_1$ sur le système de couples d'électrodes 119, 127 permet de contrecarrer le déplacement et de ramener la masse mobile 30 à sa position d'origine. De même l'application d'une tension $\Delta V_2$ sur le système de peignes électrostatiques 125, 133 permet de ramener la masse mobile à sa position d'origine après un déplacement détecté dans le sens des x<0.

Il est possible d'utiliser plusieurs transistors T1, T2 pour permettre la détection 2D ou 3D des déplacements d'une structure mécanique, comme le montre la figure 7. Dans ce cas, un déplacement d'une masse mobile 30 selon x est en particulier détecté par une variation d'entrefer au niveau du transistor T2, un déplacement selon y est en particulier détecté par une variation d'entrefer au niveau du transistor T1, un déplacement selon z est détecte par des variations de surfaces au niveau des transistors T1 et/ou T2.

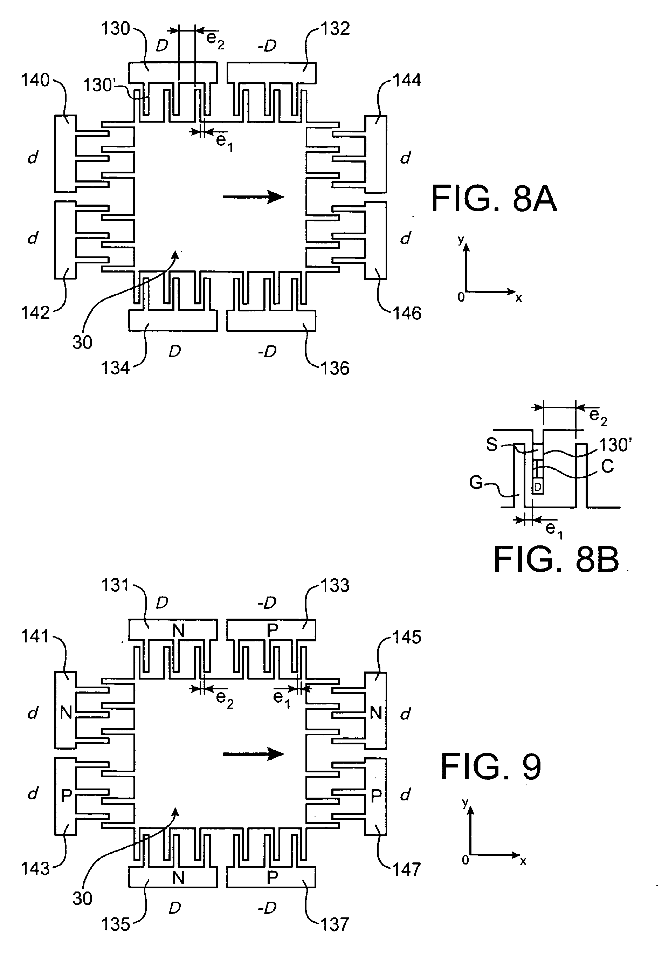

Des exemples de deux schémas différentiels supplémentaires pour détection 2D vont être donnés en liaison avec les figures 8A - 8B et 9.

Dans les deux cas, on divise le système en 4 parties.

Le premier cas (figure 8A) met en oeuvre huit ensembles ou étages 130, 132, 134, 136, 140, 142, 144, 146 qui sont disposés autour de la masse mobile 30, de forme carrée ou rectangulaire dans le plan xOy dans l'exemple de la figure 8A. Chaque étage est constitué d'un ensemble de peignes inter-digités dont les doigts non reliés à la masse 30 comportent les source, drain, et canal des transistors alors que les doigts reliés à la masse comportent les grilles des transistors. Un gap e1 sépare ces deux doigts, alors qu'un gap e2 sépare deux éléments constitutifs du peigne inter-digité. De façon avantageuse, e2 est plus grand que e1.

Les étages 132 et 136, identiques entre eux, ont un gap e1 alternés par rapport au gap e2 des étages 130, 134, de manière à ce qu'un déplacement de la masse 30 selon l'axe Ox entraîne une variation de courant +ΔI sur les étages 130 et 134 consécutive à une augmentation du gap e1 et une variation de courant -ΔI sur les étages 132 et 136 consécutive à une réduction du gap e1.

Il en est de même pour les étages 140 et 144 comparés aux étages 142 et 146.

Tous les transistors utilisés pour la détection sont alors du même type.

La figure 8B représente de manière plus précise la structure d'un doigt 130' du dispositif de la figure 8A. On voit clairement sur cette figure 8B la disposition du drain D, du canal C et de la source S, le tout étant en regard de la grille G. Les autres doigts ont une structure identique ou similaire.

Le second cas (figure 9), met en oeuvre divers types de transistors pour les diverses parties. La disposition des éléments drain, grille, source des transistors est identique à celle décrite en liaison avec la figure 8A, c'est-à-dire que ces éléments sont aussi disposés sur les doigts des peignes interdigités. Chaque doigt a de préférence également la configuration décrite en liaison avec la figure 8B.

Huit ensembles ou étages 131, 133, 135, 137, 141, 143, 145, 147 sont disposés autour de la masse mobile 30, là encore de forme sensiblement carrée ou rectangulaire dans l'exemple donné. De même les étages 141 - 145 - 143 - 147 sont identiques entre eux du point de vue des gap, mais ils diffèrent par la nature des transistors : de type N sur 141 et 145 et de type P sur 143 et 147.

Si une accélération $\gamma_x$ se produit dans le plan selon l'axe (Ox), les variations de courants induites par le déplacement de la masse de la figure 8 sont, pour les étages 130 et 134 : ΔI. Cette variation est liée à une variation de gap.

Pour les étages 132 et 136, cette variation est de -ΔI pour chacun.

En travaillant en différentiel, on obtient une variation globale de courant :

$$\texttt{(variation de 130)+(variation de 134)-(variation de 132)-(variation de 136)=4}\,\Delta\,\texttt{I.}$$

Pour les étages 140, 142, 144, 146, la variation de courant δI va rester faible, en particulier si les peignes recouvrent en grande partie la grille, la source et le drain de chaque transistor, car sur ces étages, la variation de capacité est due à une variation de surface alors que sur les étages 130 - 132 - 134 - 136 la variation de capacité est due à une variation d'entrefer.

Pour les étages 140 et 142, on a une variation de courant de -δI, et une variation de δI pour les étages 144 et 146. En travaillant en différentiel, on trouve une variation globale de :

$$\texttt{(variation de 140)+(variation de 144)-(variation de 142)-(variation de 146)=0.}$$

Comme l'architecture est symétrique, on aura les mêmes résultats pour une accélération selon Oy, notée $\gamma_y$.

Le fonctionnement de la structure décrite en figure 9 est du même type que celle des figures 8A, 8B, mais s'appuie sur l'alternance de transistors de type opposé (N et P) plutôt que sur l'alternance de gap avec un transistor de même type. De façon avantageuse, les transistors N et P sont déterminés de façon à obtenir une variation de courante ΔI opposée (entre N et P) pour une variation de gap e1 donnée.

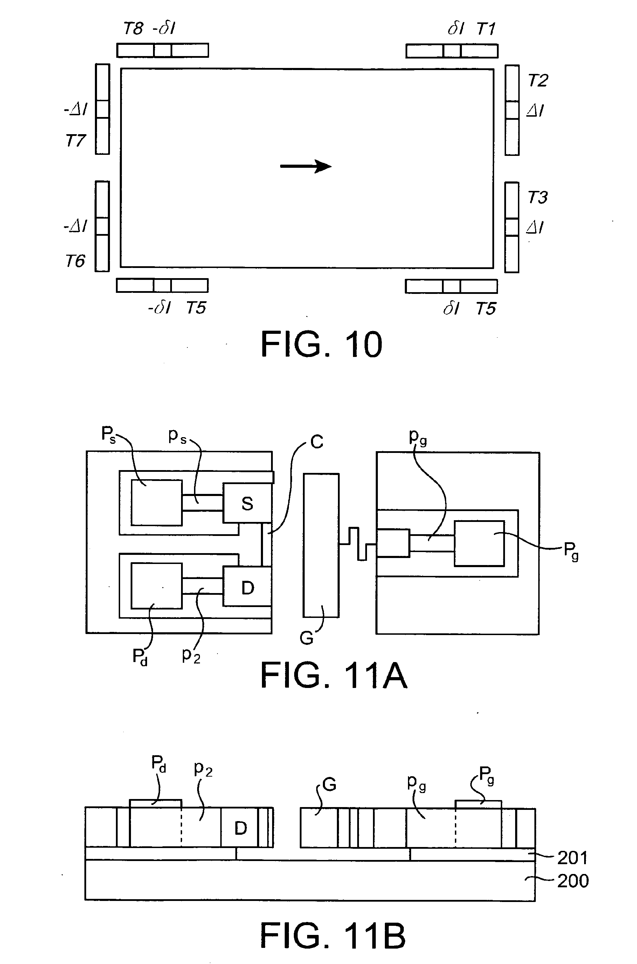

Il est aussi possible de réaliser un système différentiel utilisant des transistors T1 - T8 placés en regard des 4 coins d'une masse sismique 30 comme représenté sur la figure 10. Le raisonnement est identique au précédent. Les variations de courant ± ΔI, ±δI des différents transistors, induites par le déplacement de la masse 30, sont indiquées sur la figure 10.

Quel que soit le nombre de transistors utilisé, un dispositif selon l'invention pourra être relié à des moyens, par exemple de type microprocesseur ou microordinateur, de traitement et/ou stockage des données de courant de sortie du ou des transistors. Des moyens de traitement permettront par exemple de réaliser une sommation des différents courants de sortie lorsqu'on souhaite augmenter le courant de sortie total, ou des différences entre courants lors d'une mesure différentielle. Lors d'un fonctionnement en boucle fermée, ces moyens peuvent calculer une force de rétroaction à appliquer pour s'opposer au déplacement de la masse mobile et envoyer une consigne aux moyens de compensation.

Un dispositif selon l'un quelconque des modes de réalisation de l'invention, présente avantageusement 2 modes de fonctionnements.

Selon un premier mode, la structure mécanique ne se déplace pas au repos (premier état); mais elle se déplace sous l'impact d'une influence extérieure (deuxième état).

Selon un deuxième mode, la structure mécanique est, dans un premier état, soumise à un déplacement déterminé (par exemple une mise en vibration de la structure selon sa fréquence de résonance) ; sous l'impact d'une influence extérieure, ce déplacement déterminé est modifié, entraînant notamment une variation de la fréquence de résonance de la structure, donc un deuxième état, qui peut être alors mesurée par l'intermédiaire du signal de sortie du ou des transistor(s) associé(s).

L'invention prend un intérêt particulier pour des accéléromètres réalisés dans des tranches de SOI mince pour les raisons suivantes.

La fabrication sur substrat SOI mince (typiquement quelques centaines de nm, par exemple entre 100 nm et 500 nm ou 900 nm), implique des surfaces en regard (dans le cas de l'approche capacitive) très faibles, ce qui conduit, même dans le cas d'entrefers très réduits (50 nm - 100 nm), à des capacités très faibles (de l'ordre du fF avec des variations à détecter de l'ordre de l'aF). Cette situation rend la détection capacitive délicate et limite ses performances.

Ce type de fabrication permet aussi des implantations sur toute l'épaisseur du silicium SOI (quelques centaines de nm), ce qui n'était pas envisageable pour des structures MEMS classiques avec une épaisseur de plusieurs $\mu$m à dizaines de $\mu$m. Cette particularité permet de réaliser de transistors à canal vertical (perpendiculaire à la puce). Ce canal est donc susceptible de se trouver parallèle au champ d'une structure mécanique, par exemple de type N-MEMS réalisée dans le silicium SOI et se déplaçant dans le plan du substrat.

Dans chacun des exemples de dispositifs selon l'invention et leurs procédé de fabrication particuliers présentés ci-dessous, le dispositif est réalisé sur un substrat de SOI mince (avec substrat massif 200 et couche diélectrique 201) :

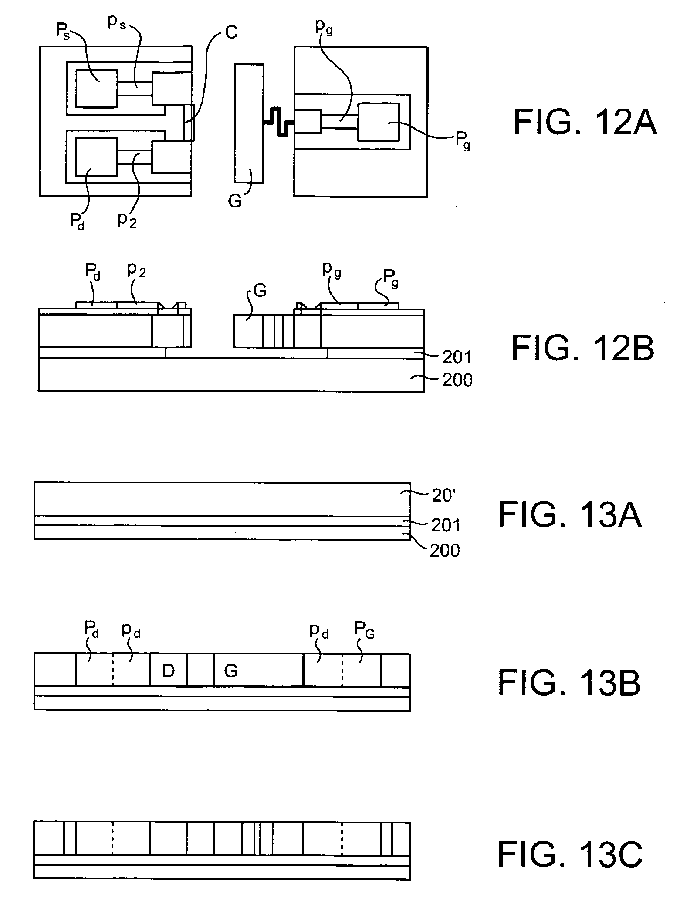

- Dans le premier dispositif (Figures 11A et 11B), les pistes ps, pd, pg permettant de relier les source S, drain D et grille G du transistor aux plots (plot source Ps, plot drain Pd, plot grille Pg) sont réalisées en utilisant la couche superficielle de silicium du SOI.
- Dans le deuxième dispositif, (Figures 12A et 12B), les pistes ps, pd, pg permettant de relier la source S, le drain D et la grille G de chaque transistor aux plots (plot source Ps, plot drain Pd, plot grille Pg) sont réalisées en Métal, par exemple tungstène, cuivre, aluminium et leurs alliage ou encore un alliage de type aluminium-silicium.

Les figures 11A et 11B présentent un dispositif selon l'invention, proche de celui décrit sur la figure 1, dans le cas où les pistes de liaison entre les sources, drain et grille du transistor et les plots sont réalisés en utilisant le silicium du SOI.

Les figures 12A et 12B présentent un dispositif selon l'invention et proche de celui décrit sur la figure 1A, dans le cas où les pistes de liaison entre les source, drain et grille du transistor sont réalisées avec un niveau Métal. Avantageusement on utilise des pistes en silicium lorsque l'électronique de détection est fabriquée séparément du dispositif selon l'invention et on utilise des plots en métal lorsque l'électronique de détection est réalisée sur le même substrat que le dispositif selon l'invention.

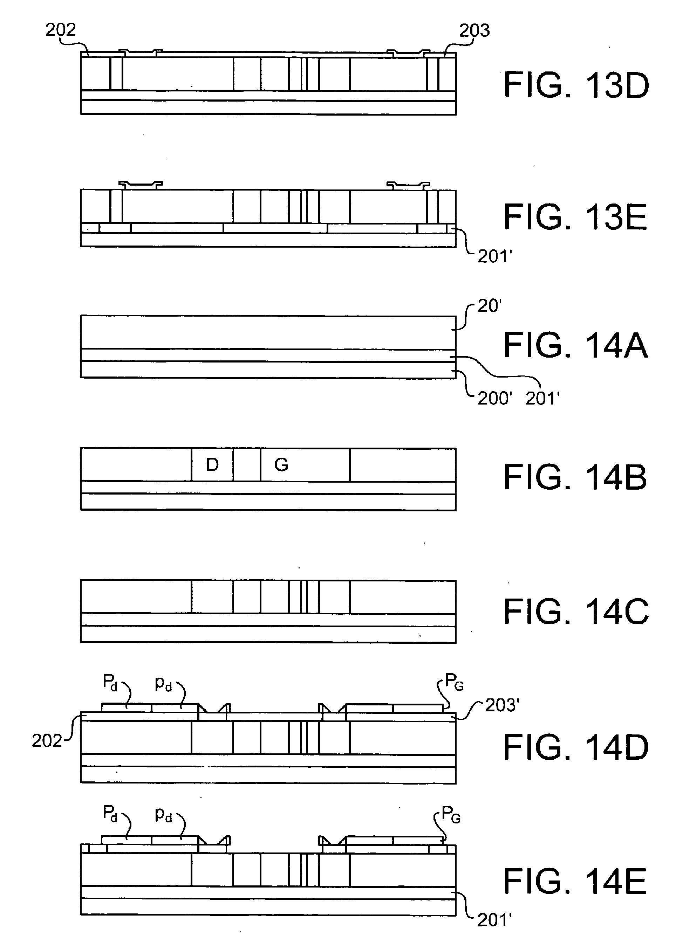

Chacun des procédés de fabrication illustrés met en oeuvre un substrat SOI mince, par exemple d'épaisseur inférieure à 500nm de silicium superficiel 20, 20' (figures 13A et 14A) sur lequel sont réalisées les étapes suivantes :

Etape 1 - Le dopage du silicium de différentes régions : au niveau du transistor (canal C, source S, drain D, grille G, etc ...), de la structure mécanique (élément mobile, liaison élastique, etc...), et éventuellement de certaines parties du substrat semi-conducteur massif 200, 200' situé sous l'oxyde 201, 201' ;

* Dans le cas de la figure 13B, on réalise des dopages au niveau des pistes de liaison vers les plots (pistes source ps, drain pd et grille pg) et au niveau des plots (Ps, Pd, Pg) avant leur métallisation.
* Dans le cas des figures 14D, 14E, les plots et les pistes de liaison sont constitués de pistes métalliques isolées du silicium 20' par un oxyde 202', 203'.

Ces dopages mettent en oeuvre des niveaux de photolithographie et d'implantations.

Etape 2 - La définition des éléments mécaniques et l'isolation éventuelles des transistors :

* Dans le cas de la figure 13C, l'isolation électrique des sources, drain, grille, mais aussi des pistes de liaison et des plots, est réalisée grâce à une gravure du silicium 20 sur les pourtours de ces motifs.
* Dans le cas de la figure 14C, seuls les éléments mécaniques (comprenant la grille mobile) sont réalisés lors de cette étape. L'isolation des pistes de liaison et des plots est réalisée par la gravure localisée de la couche de métal, elle-même déposée sur une couche d'oxyde 202', 203' (figure 14D).

Cette étape met en oeuvre une photolithographie et une gravure anisotrope du silicium.

Etape 3 - La réalisation des éléments électriques en Métal (figures 13D et 14D). Pour cela, la structure est préalablement bouchée par une couche d'oxyde 202, 203, 202', 203'. Cet oxyde va également provisoirement remplir les zones gravées lors des étapes précédentes. Puis suit une étape d'ouverture de l'oxyde (photolithographie + gravure de l'oxyde), et le dépôt métallique et une étape de photolithographie (avec éventuellement un masque dur) et de gravure du Métal :

* Dans le cas de la figure 13D, le niveau Métal sert à définir les zones de contact (liaison entre le Métal et Source, Drain, Grille), les pistes de liaison et les plots.
* Dans le cas de la figure 14D, le niveau Métal sert uniquement à métalliser les plots.

Etape 4 - La libération des structures mécaniques mobiles. Cette étape met en oeuvre une gravure isotrope de l'oxyde 201, 201' du substrat SOI (figures 13E et 14E).

Dans les deux cas, le transistor peut être réalisé dans toute ou partie de l'épaisseur de SOI (implantations définissant canal, source, drain, grille, etc...). La partie isolante comprise entre le canal et la grille est constituée du milieu remplissant le gap réalisé par gravure, par exemple du vide, de l'air ou un autre gaz ou même un liquide. Un oxyde de grille solide peut éventuellement être ajouté à la surface du canal (par exemple par oxydation thermique ou dépôt d'un oxyde), pour améliorer les performances du transistor.

On utilise une métallisation des plots (et éventuellement des pistes de liaison et des contacts), qui est résistante au procédé de libération des structures mécaniques, par exemple AlSi ou AlCu si l'on utilise une gravure HF vapeur pour la libération.

En vue de la réalisation d'une grille flottante, comme expliqué en liaison avec la figure 1B, l'oxyde de grille peut être réalisé entre les étapes 2 et 3 du procédé décrit ci-dessus, et la grille flottante Gf peut être réalisée lors de l'étape 3.

L'invention permet de miniaturiser un MEMS dans une gamme nanomètrique (NEMS), en réalisant le dispositif (transistor et masse mobile) dans un substrat ou une couche mince (d'épaisseur comprise par exemple entre 10 nm ou 50 nm et quelques centaines de nm, par exemple 500 nm ou 900 nm), tout en offrant la capacité de détecter le mouvement de la structure mécanique par transistor.

En outre, l'invention facilite grandement la co-intégration « in IC », du fait même que la couche mince utilisée pour la fabrication du MEMS-NEMS peut être la même que celle utilisée pour la fabrication du transistor et éventuellement d'un circuit intégré (IC).

L'invention permet également d'utiliser une couche de très bonne qualité mécanique (par exemple : silicium mono-cristallin), en particulier dans le cas où l'on travaille avec des substrats SOI ou un procédé de type « SON ».

Les applications industrielles de l'invention sont celles pouvant être adressées par les composants MEMS-NEMS, avec un intérêt tout particulier pour les secteurs nécessitant des composants bas-coût sans forcément des performances très élevées et celles nécessitant absolument la co-intégration MEMS-1C.

On peut ainsi citer le domaine des capteurs (accélération, gyromètre, etc....), des résonateurs (téléphonie mobile, etc....) .

Par exemple, la structure mécanique est un accéléromètre comportant au moins un élément fixe et au moins un élément mobile, associé à un ou plusieurs transistors. Pour chaque transistor, la grille ou l'élément de conduction est relié mécaniquement à l'élément mobile tandis que, respectivement, l'élément de conduction ou la grille est relié à l'élément fixe de la structure mécanique.

Le fonctionnement d'un dispositif selon l'invention est tout à fait différent de celui d'un dispositif mettant en oeuvre un SET. En effet, le SET fonctionne sur la base d'un Blocage de Coulomb et d'un effet Tunnel, et impose l'existence d'un îlot conducteur (stockage de l'électron par Blocage de Coulomb, matériau conducteur métal ou polymère conducteur) séparé des zones de source et drain par des jonctions tunnel. Le chemin de conduction situé entre la source et le drain est donc composé d'un îlot conducteur et de 2 jonctions tunnel au lieu d'un élément continu de semi-conducteur comme on le rencontre dans un transistor FET. Le courant électrique est assurée par le déplacement d'un ou quelques électrons par effet tunnel (discrétisation du courant) au lieu d'un flux continu de porteurs (électrons ou trous) dans un FET.

Le choix d'utiliser un SET dans ces structures impose de mettre en oeuvre des dimensions très faibles (quantums dots de l'ordre de grandeur de qq nm, distance entre NEMS résonant et ilot de qq 10 nm) pour permettre une quantification des phénomènes permettant d'envisager une conduction électron par électron. De même les épaisseurs des matériaux dans lesquels sont réalisées ces structures sont faibles et peu compatibles avec la fabrication de MEMS inertiels par exemple.

**Revendications**

1. Dispositif de détection réalisé à partir d'un substrat, ce dispositif comportant au moins un transistor (2, 100, 102, 104, 108, 110, 112, 116, 101, 103, 105, 107, 114, 116, 118, 120, 122, 124, 126, 128) formé, d'une part, par une grille (14, G) et, d'autre part, par un élément de conduction comprenant une source (8, S) et un drain (10, D) reliés par un semi-conducteur formant un canal vertical (12, C), en ce sens que les surfaces en regard de l'élément de conduction et de la grille définissent des plans sensiblement perpendiculaires à un plan, dit plan principal du dispositif passant par le drain (10, D), la source (8, S), le canal et la grille (14, G) du transistor, et ce plan principal étant sensiblement parallèle au plan dudit substrat, la direction de propagation du courant, entre la source et le drain, dans le canal, étant incluse dans ce plan principal, la grille et l'élément de conduction étant aptes à se déplacer relativement l'un par rapport à l'autre, l'un étant fixe, l'autre étant relié à une structure mécanique (30), mobile dans le plan principal.

2. Dispositif selon la revendication 1, comportant en outre une grille flottante (Gf) sur le canal (12, C).

3. Dispositif selon l'une des revendications 1 ou 2, la structure mécanique (30) comportant la grille (14, G) du transistor ou étant reliée de manière fixe à cette grille.

4. Dispositif selon l'une des revendications 1 à 3 :

   - le ou les transistor(s) étant fixe(s), et la structure mécanique (30) mobile ;
   - ou le ou les transistor(s) étant mobile (s), et la structure mécanique (30) fixe.

5. Dispositif selon l'une des revendications 1 à 4, la structure mécanique (30) et le transistor formant une structure résonante.

6. Dispositif selon l'une des revendications 1 à 5, le transistor fonctionnant en faible inversion ou en forte inversion.

7. Dispositif selon l'une des revendications 1 à 6, comportant plusieurs transistors, formant une structure différentielle et/ou formant une structure fonctionnant en boucle fermée.

8. Dispositif selon l'une des revendications 1 à 7, comportant plusieurs transistors ($T_1$-$T_8$) disposés de manière à détecter des déplacements en 2 dimensions ou en 3 dimensions.

9. Dispositif selon la revendication 7 ou 8 :

   - les transistors étant identiques, à gaps alternés, et disposés autour de la masse mobile (30).
   - ou les transistors étant disposés alternativement N puis P autour de la masse mobile (30).

10. Dispositif selon l'une des revendications 1 à 9, comportant plusieurs transistors ($T_1$-$T_8$), la grille (14, G) de chaque transistor étant solidaire de la structure mécanique mobile (30), l'ensemble des grilles étant disposé en forme de peigne sur au moins un côté de la structure mécanique mobile (30).

11. Dispositif selon la revendication 10, le canal, le drain et la source de chaque transistor étant disposé face à une grille (G), l'ensemble des canaux, des drains et des sources formant au moins un peigne (31, 37).

12. Dispositif selon l'une des revendications 1 à 11, comportant .en outre des moyens de détection d'un signal provenant du ou des transistor (s) .

13. Dispositif selon la revendication 12 :

   - les moyens de détection d'un signal étant réalisés sur le même substrat que le dispositif de détection, les pistes de liaison entre source, drain et grille du transistor étant en métal ;

- ou les moyens de détection d'un signal n'étant pas réalisés sur le même substrat que le dispositif de détection, les pistes de liaison entre source, drain et grille du transistor étant en silicium.

14. Procédé de réalisation d'un dispositif de détection selon l'une des revendications 1 à 13 dans lequel on forme la structure mécanique (30), le drain (10, D), la source (8, S), le canal (12, C) et la grille (14, G) du transistor dans un même plan ou dans une même couche, contenant le plan principal du dispositif.

15. Procédé selon la revendication 14, le plan ou la couche étant défini par la couche superficielle (20, 20') d'un substrat SOI.

**Claims**

1. Detection device made from a substrate, this device comprising at least one transistor (2, 100, 102, 104, 108, 110, 112, 116, 101, 103, 105, 107, 114, 116, 118, 120, 122, 124, 126, 128) formed firstly from a gate (14, G) and secondly a conducting element comprising a source (8, S) and a drain (10, D) connected together by a semiconductor forming a vertical channel (12, C), in the sense that the surfaces facing the conducting element and the gate define planes approximately perpendicular to a plane called the principal plane of the device, passing through the transistor drain (10, D), the source (8, S), the channel and the gate (14, G), and this principal plane being approximately parallel to said substrate, the current propagation direction in the channel between the source and the drain being contained in this principal plane, the gate and the conducting element being capable of moving relative to each other, one being fixed and the other being connected to a mechanical structure (30), free to move in the principal plane.

2. Device according to claim 1, also comprising a floating gate (Gf) on the channel (12, C).

3. Device according to one of claims 1 or 2, the mechanical structure (30) comprising the transistor gate (14, G) or being connected fixed to this gate.

4. Device according to one of claims 1 to 3:

   - the transistor(s) being fixed and the mechanical structure (30) being mobile;
   - or the transistor(s) being mobile (s), and the mechanical structure (30) being fixed.

5. Device according to one of claims 1 to 4, the mechanical structure (30) and the transistor forming a resonant structure .

6. Device according to one of claims 1 to 5, the transistor operating in low inversion or in high inversion.

7. Device according to one of claims 1 to 6, comprising several transistors, forming a differential structure and/or forming a structure operating in closed loop.

8. Device according to one of claims 1 to 7 comprising several transistors ($T_1$-$T_8$) arranged so as to detect displacements in 2 dimensions or in 3 dimensions.

9. Device according to claim 7 or 8:

   - the transistors being identical, with alternate gaps, and arranged around the mobile mass (30);
   - or the transistors being alternately arranged N then P around the mobile mass (30).

10. Device according to one of claims 1 to 9, the gate (14, G) of each transistor being fixed to the mobile mechanical structure (30), the set of gates being arranged in the form of a comb on at least one side of the mobile mechanical structure (30).

11. Device according to claim 10, the channel, the drain and the source of each transistor being arranged facing a gate (G), the set of channels, drains and sources forming at least one comb (31, 37).

12. Device according to one of claims 1 to 11, also comprising means of detecting a signal originating from the transistor (s).

**13.** Device according to claim 12:

- the means of detecting a signal being made on the same substrate as the detection device, the connecting tracks between the transistor source, drain and gate being made of metal;
- or the means of detecting a signal not being made on the same substrate as the detection device, the connecting tracks between the transistor source, drain and gate being made of silicon.

**14.** Method of manufacturing a detection device according to one of claims 1 to 13 in which the transistor mechanical structure (30), the drain (10, D), the source (8, S), the channel (12, C) and the gate (14, G) are formed in the same plane or in the same layer, containing the principal plane of the device.

**15.** Method according to claim 14, the plane or the layer being defined by the surface layer (20, 20') of an SOI substrate.

**Patentansprüche**

**1.** Detektionsvorrichtung, ausgebildet aus einem Substrat, wobei diese Vorrichtung wenigstens einen Transistor (2, 100, 102, 104, 108, 110, 112, 116, 101, 103, 105, 107, 114, 116, 118, 120, 122, 124, 126, 128) umfasst, einerseits gebildet durch ein Gate (14, G) und andererseits durch ein Leitelement mit einer Source (8, S) und einem Drain (10, D), verbunden durch einen Halbleiter, der einen Kanal (12, C) bildet, vertikal in dem Sinne, dass die gegenüberstehenden Oberflächen des Leitelements und des Gates Ebenen bilden, die im Wesentlichen senkrecht sind zu einer als Hauptebene der Vorrichtung bezeichneten Ebene, die durch das Drain (10, D), die Source (8, S), den Kanal und das Gate (14, G) des Transistors verläuft, und dass diese Hauptebene im Wesentlichen parallel ist zu der Ebene des genannten Substrats, wobei die Stromausbreitungsrichtung in dem Kanal zwischen der Source und dem Drain in dieser Hauptebene enthalten ist und das Gate und das Leitelement fähig sind, sich relativ zueinander zu verschieben, wobei das eine feststehend ist, das andere mit einer in der Hauptebene beweglichen mechanischen Struktur (30) verbunden ist.

**2.** Vorrichtung nach Anspruch 1 mit außerdem einem schwebenden Gate (Gf) auf dem Kanal (12, C).

**3.** Vorrichtung nach einem der Ansprüche 1 oder 2, wobei die mechanische Struktur (30) das Gate (14, G) des Transistors umfasst oder fest mit diesem Gate verbunden ist.

**4.** Vorrichtung nach einem der Ansprüche 1 bis 3:

- wobei der oder die Transistor(en) fest ist (sind) und die mechanische Struktur (30) beweglich ist;
- oder der oder die Transistor(en) beweglich ist (sind) und die mechanische Struktur (30) fest ist.

**5.** Vorrichtung nach einem der Ansprüche 1 bis 4, wobei die mechanische Struktur (30) und der Transistor eine Resonanzstruktur bilden.

**6.** Vorrichtung nach einem der Ansprüche 1 bis 5, wobei der Transistor schwach invertierend oder stark invertierend funktioniert.

**7.** Vorrichtung nach einem der Ansprüche 1 bis 6, mehrere Transistoren umfassend, die eine différentielle Struktur bilden und/oder eine als geschlossene Schleife funktionierende Struktur bilden.

**8.** Vorrichtung nach einem der Ansprüche 1 bis 7, mehrere Transistoren ($T_1$-$T_8$) umfassend, so angeordnet, dass sie Verschiebangen in 2 oder 3 Dimensionen detektieren.

**9.** Vorrichtung nach Anspruch 7 oder 8:

- wobei die Transistoren identisch sind, mit alternierenden Lücken, und um die bewegliche Masse (30) herum angeordnet sind,
- oder die Transistoren abwechselnd, N dann P, um die bewegliche Masse (30) herum angeordnet sind.

**10.** Vorrichtung nach einem der Ansprüche 1 bis 9 mit mehreren Transistoren ($T_1$-$T_8$), wobei das Gate (14, G) jedes Transistors fest verbunden ist bzw. aus einem Stück ist mit der beweglichen mechanischen Struktur (30) und alle Gates kammförmig auf wenigstens einer Seite der beweglichen mechanischen Struktur (30) angeordnet sind.

11. Vorrichtung nach Anspruch 10, wobei der Kanal, das Drain und die Source jedes Transistors einem Gate (G) gegenüber angeordnet sind und alle Kanäle, Drains und Sources wenigstens einen Kamm (31, 37) bilden.

12. Vorrichtung nach einem der Ansprüche 1 bis 11 mit außerdem Einrichtungen zur Detektion eines von dem (den) Transistor(en) stammenden Signals.

13. Vorrichtung nach Anspruch 12:

   - wobei die Einrichtungen zur Detektion eines Signals auf demselben Substrat wie die Detektionsvorrichtung realisiert sind und die Verbindungsbahnen zwischen Source, Drain und Gate des Transistors aus Metall sind;
   - oder die Einrichtungen zur Detektion eines Signals nicht auf demselben Substrat wie die Detektionsvorrichtung realisiert sind und die Verbindungsbahnen zwischen Source, Drain und Gate des Transistors aus Silicium sind.

14. Verfahren zur Herstellung einer Detektionsvorrichtung nach einem der Ansprüche 1 bis 13, bei dem man die mechanische Struktur (30), das Drain (10, D), die Source (8, S), den Kanal (12, C) und das Gate (14, G) des Transistors in einer selben, die Hauptebene der Vorrichtung enthaltenden Ebene oder Schicht ausbildet.

15. Verfahren nach Anspruch 14, wobei die Ebene oder die Schicht durch die Oberflächenschicht (20, 20') eines SOI-Substrats definiert ist.

FIG. 1A

FIG. 1B

FIG. 2

FIG. 3

FIG. 4A

100   102   I1 = n(I01 + ΔI1)   104

31

$e_o + \Delta e$

33   35

32   34

30

108   112

$e_o - \Delta e$

110   37

I2 = n(I02 + ΔI2)

I1 = n(I01 + ΔI1)   I2 = n(I02 + ΔI2)

31

$e_o - \Delta e$

101   103

33   35

32   30   34

$e_o + \Delta e$

FIG. 4B

105   107

37

116   118

Id1 = Id0 + Δ.Id   Id1 = Id0 - Δ.Id   31

114   120

33   $e_o + \Delta e$   $e_o - \Delta e$   35

32   30   34

FIG. 5   114   128

122   124   126   37

FIG. 6

FIG. 7

FIG. 8A

FIG. 8B

FIG. 9

**FIG. 10**

**FIG. 11A**

**FIG. 11B**

FIG. 12A

FIG. 12B

FIG. 13A

FIG. 13B

FIG. 13C

202 ⌐ ⌐ 203

**FIG. 13D**

201'

**FIG. 13E**

20'

200' 201'

**FIG. 14A**

D  G

**FIG. 14B**

**FIG. 14C**

$P_d$  $p_d$  $P_G$

203'

202 ⌐

**FIG. 14D**

$P_d$  $p_d$  $P_G$

**FIG. 14E**

201'

## RÉFÉRENCES CITÉES DANS LA DESCRIPTION

**Documents brevets cités dans la description**

- WO 03078299 A
- US 5541437 A
- US 6204544 B
- US 20030173611 A

**Littérature non-brevet citée dans la description**

- **J.S. Aldridge et al.** Nanoelectronic and nanome-chanical systems. *SPIE Proceedings,* 2001, vol. 4591, 11
- **Abelé.** Electromechanical modelling of MEMS Resonators with MOSFET detection. *NSTI Nanotech 2005 Conférence,* 2005, vol. 3, ISBN 0-9767985-2-2
- **Buschnakowski et al.** Development and character-isation of a high aspect ratio vertical FET sensor for motion detection. *Transducers 2003,* 08 Juin 2003